# EUROPÄISCHE PATENTSCHRIFT

(11) **EP 0 742 812 B1**
(45) Veröffentlichungstag und Bekanntmachung des Hinweises auf die Patenterteilung: **14.10.1998**
(21) Anmeldenummer: 95907582.1
(22) Anmeldetag: 23.01.1995
(51) Int. Cl.: C09D 11/02, C08F 8/06

(54) **VERFAHREN ZUR ERZEUGUNG VON DRUCKEN NACH DEM OFFSET-HEATSET-VERFAHREN**
PROCESS FOR PRINTING BY THE OFFSET-HEATSET METHOD
PROCEDE POUR LA PRODUCTION D'IMPRIMES SELON LE PROCEDE OFFSET FAISANT APPEL A UNE ENCRE THERMOSECHANTE

(30) Priorität: 04.02.1994 DE 4403478
(43) Veröffentlichungstag der Anmeldung: 20.11.1996
(73) Patentinhaber: BASF AKTIENGESELLSCHAFT, 67056 Ludwigshafen (DE)
(72) Erfinder: WEISS, Stefan, D-69151 Neckargemünd (DE); MÜLLER, Michael, Wolfgang, D-68647 Biblis (DE); BOEHLKE, Klaus, D-67258 Hessheim (DE); WEBER, Wilhelm, D-67435 Neustadt (DE)
(86) Internationale Anmeldenummer: EP9500225
(87) Internationale Veröffentlichungsnummer: WO9521221

(56) Entgegenhaltungen:
- EP-A- 0 304 245
- DE-A- 1 570 652
- DE-A- 2 851 579
- US-A- 3 330 684
- PATENT ABSTRACTS OF JAPAN vol. 013 no. 236 (C-602) ,30.Mai 1989 & JP,A,01 045448 (MITSUI PETROCHEM IND) 17.Februar 1989,
- DATABASE WPI Week 8731 Derwent Publications Ltd., London, GB; AN 87-217771 & JP,A,62 143 983 (TOYO INK MFG KK) , 27.Juni 1987 in der Anmeldung erwähnt

## Beschreibung

Die vorliegende Erfindung betrifft ein verbessertes Verfahren zur Erzeugung von Drucken nach dem Offset-Heatset-Verfahren mittels einer Druckfarbe auf Mineralölbasis unter Verwendung eines Mittels zur Erhöhung der Abriebfestigkeit des Druckes. Weiterhin betrifft die Erfindung bestimmte neue Druckfarben, die für den Offset-Heatset-Druck geeignet sind, sowie oxidiertes Polyethylen bestimmter Spezifikation.

Der Offset-Druck, sowie die hierfür verwendeten Druckfarben auf Mineralölbasis sind allgemein bekannt. Diese Druckfarben enthalten neben Pigmenten, dem Bindemittel und dem Mineralölverdünnungsmittel meist noch Hilfsmittel für die Erleichterung des Druckvorgangs, die Erhöhung der Stabilität der Druckfarbe sowie für die Qualitätsverbesserung der hiermit erzeugten Drucke, darunter vor allem Zusatzstoffe zur Erhöhung der Abriebfestigkeit der Drucke.

Bei der Offset-Drucktechnik gibt es verschiedene Methoden um die bedruckten Papiere zu trocknen. Handelt es sich um das sogenannte Coldset-Verfahren, bei welchem man den Druck bei Raumtemperatur trocknen läßt, verwendet man zur Erhöhung der Abriebfestigkeit der Drucke vornehmlich Wachse und wachsartige Olefinpolymere wie wachsartiges nicht-oxidiertes Polyethylen.

Im Falle des sogenannten Heatset-Verfahrens, bei dem die bedruckten Papierbahnen zur Fixierung des Druckes kurzzeitig auf etwa 80 bis 200°C erhitzt werden, sind die genannten Wachse jedoch ungeeignet, weil sie bei dieser tnermischen Behandlung schmelzen und/oder sich auflösen und dadurch die gewünschte Wirkung verlieren. Man verwendet daher hochschmelzende, wachsartige Polymerisate aus fluorierten Olefinen, insbesondere Polytetrafluorethylen-Wachse oder deren Mischungen mit anderen natürlichen und synthetischen Wachsen. Diese Stoffe sind jedoch teuer und haben den Nachteil, daß bei der Verbrennung des bedruckten Papiers Fluorwasserstoff und flüchtige organische Fiuorverbindungen freigesetzt werden.

Der Zusatz von feinteiligem oxidierten Polyethylen zur Verbesserung von Druckfarben für den Tiefdruck ist aus der DE-A 25 47 967 bekannt, nicht jedoch zur Verbesserung der Offset-Heatset-Druckfarben auf Mineralölbasis. In der EP-A 324 077 finden oxidierte Polyolefinwachse als Zusätze in Tiefdruckfarben Erwähnung. In der JP-B 62911/93 werden als Zusätze zu Offset-Heatset-Druckfarben diverse feinteilige Harze mit kugelförmiger Gestalt empfohlen, z.B. Nylon, Silicon-, Vinyl-, Epoxy-, Olefin-und Styrolharze, natürliche Wachse, Paraffinwachse und Polyolefine sowie allgemein Oxidationsprodukte dieser Harze.

DE-A-2 851 579 beschreibt ein feinteiliges oxidiertes Polyethylenwachs der SZ 18-25 (nach DGF M-IV 2) und der Schmelzviskosität 300-500 mm²/s (nach DGF M-III 8) als Zusatz für Druckfarben zur Verbesserung der Abriebfestigkeit.

Der Erfindung lag die Aufgabe zugrunde, die Abriebfestigkeit von Drucken, die nach dem Offset-Heatset-Druckverfahren hergestellt werden, auf wirtschaftliche Weise zu verbessern.

Demgemäß wurde ein Verfahren zur Erzeugung von Drucken nach dem Offset-Heatset-Verfahren mittels einer Druckfarbe auf Mineralölbasis unter Mitverwendung eines oxidierten Olefinpolymerisates zur Erhöhung der Abriebfestigkeit des Druckes gefunden, dadurch gekennzeichnet, daß man ein oxidiertes Olefinpolymerisat mit der mittleren Teilchengröße im Bereich von 0.5 bis 40 µm verwendet, das eine Säurezahl von 5 bis 50 mg KOH/g Polymer, gemessen nach DGF M-IV 2 (57) hat, dessen Schmelzeviskosität 100 bis 15000 mm²/s beträgt, gemessen nach DGF M-III 8 (75), und welches eine Dichte im Bereich von 0.97 - 1.00 g/cm³ aufweist.

Weiterhin wurden neue, für den genannten Zweck geeignete Druckfarben, sowie oxidiertes Polyethylen bestimmter neuer Spezifikation gefunden.

Oxidierte Polyolefinwachse, im folgenden als oxidierte Wachse benannt, sind allgemein bekannt, zum Teil handelsüblich und im übrigen in bekannter Weise erhältlich, z.B. indem man die zugrunde liegenden Olefinpolymerisate in wäßriger Dispersion mit Luft oxidiert, wie es z.B. in DE-A 15 70 652 näher beschrieben ist.

Als Olefinpolymerisate, die den oxidierten Wachsen zugrunde liegen, kommen vor allem in Betracht:
- Polyethylen des Molekulargewichtsbereichs (Gewichtsmittel nach der Gelpermeationschromatographie) von 100000 bis 10000000 g/mol darunter neben Polyethylen niedriger und mittlerer Dichte (LLDPE, LDPE und MDPE) vor allem Polyethylen hoher Dichte (HDPE), also mit einer Dichte über 0,94 g/cm3,
- ataktisches, syndiotaktisches und vorzugsweise isotaktisches Polypropylen des Molekulargewichtsbereichs von 70000 bis 500000 g/mol,
- Copolymerisate des Molekulargewichtsbereichs von 100000 bis 10000000 aus 0,1 bis 99,9 Mol-% Ethylen und 99,9 bis 0,1 Mol-% eines C3- bis C8-Alk-1-ens, wie vor allem Propylen; weitere geeignete Alk-1-ene sind z.B. But-1-en, Pent-1-en Hex-1-en, Oct-1-en und 4-Methylpent-1-en sowie Gemische von Alk-1-enen,

Allgemein können die Olefinpolymerisate noch aus geringen Mengen - etwa bis zu 10 Mol-% - sonstiger Comonomerer aufgebaut sein, sofern durch diese die Eigenschaften des Polymerisats nicht wesentlich geändert werden.

Auch diese Olefinpolymerisate sind bekannt oder in bekannter Weise erhältlich, so daß sich nähere Ausführungen hierzu erübrigen.

Die Säurezahl der oxidierten Wachse beträgt 5 bis 50, vorzugsweise 15 bis 30 mg KOH/g Polymer. Sie gibt an wieviel mg KOH zur Neutralisation des oxidierten Wachses erforderlich sind und wird zweckmäßigerweise nach der Meßmethode der Deutschen Gesellschaft für Fettwissenschaft e.V. DGF M-IV 2 (57) bestimmt. Die Säurezahl ist ein Maß für den Oxidationsgrad des Olefinpolymeren und kann in an sich bekannter Weise eingestellt werden.

Die Schmelzeviskosität der oxidierten Wachse liegt im Bereich von 100 bis 15000, vorzugsweise 200 bis 8000 mm²/s, gemessen nach DGF M-III 8 (75). Bei dieser Methode wird das Fließverhalten einer Polymerschmelze, also die Abhängigkeit des Schergefälles von der angelegten Schubspannung gemessen. Die Schmelzeviskosität des Wachses ist geringer als die der zugrundeliegenden Olefinpolymerisate, weil die Olefinpolymerisate bei der Oxidation einen gewissen Abbau erfahren. Durch die Wahl der Oxidationsfeinparameter kann dieser Abbau in an sich bekannter Weise gesteuert werden, wodurch sich die gewünschte Schmelzeviskosität einstellen läßt.

Die definitionsgemäßen feinteiligen Wachse werden in feinteiliger Form eingesetzt, in der sie ohne verfilmt zu sein, auch im fertigen Druck noch vorliegen. Ihre mittlere Teilchengröße beträgt 0,5 bis 40, besonders 12 bis 30 µm. Die Messung der Teilchengröße geschieht zweckmäßigerweise mit der Laserbeugungsmethode in einem Gerät der Firma Sympatec. Vorzugsweise erzeugt man die Feinteiligkeit durch Vermahlen des oxidierten Wachses, z.B. in einer Fließbett-Gegenstrahlmühle wie sie u.a. in Höffl, Karl, Zerkleinerungs- und Klassiermaschinen, Springer-Verlag, 1986, Seite 200 bis 203, beschrieben ist. Man kann das feinteilige oxidierte Wachs der Druckfarbe als trockenes Pulver oder vorzugsweise in Form einer Mineralölsuspension zusetzen. Je nach dem Basismaterial haben die oxidierten Polyolefine eine Dichte von 0.97 bis 1,00 g/cm³, gemessen nach DGF M-III 2a (57). Besonders empfehlen sich oxidierte Wachse möglichst hoher Dichte, darunter vor allem oxidiertes Polyethylen der Dichte von 0,97 bis 1,00 g/cm³. Oxidiertes Polyethylen mit dieser Dichte, einer Säurezahl von 5 bis 50 mg/g Polymer, einer mittleren Teilchengröße von 0,5 bis 40 µm und einer Schmelzeviskosität von 100 bis 15000 mm²/s, war bisher noch nicht bekannt und ist für den erfindungsgemäßen Zweck besonders gut geeignet.

Das gleiche gilt für Druckfarben auf Mineralölbasis, enthaltend 0.05 bis 10 Gew.-%, bezogen auf den Feststoffgehalt der Druckfarbe, eines feinteiligen oxidierten Olefinpolymerisats der mittleren Teilchengröße 0,5 bis 40 µm, der Säurezahl 5 bis 50 mg KOH/g Polymer, gemessen nach DGF M-IV 2 (57), der Schmelzeviskosität von 100 bis 15000 mm²/s, gemessen nach DGF M-III 8 (75), und einer Dichte im Bereich von 0.97 bis 1.00 g/cm³.

Die Konzentration des feinteiligen oxidierten Wachses in der Druckfarbe beträgt in der Regel 0,1 bis 10, vorzugsweise 0,3 bis 2,0 Gew.-%, bezogen auf den Feststoffgehalt der Druckfarbe.

Die sonstige Zusammensetzung der erfindungsgemäß für den Offset-Heatset-Druck einzusetzenden Druckfarbe entspricht derjenigen, die für diesen Zweck allgemein bekannt ist, d.h diese Druckfarben enthalten 20 bis 70 Gew.-% eines Bindemittels und 10 bis 30 Gew.-% eines Pigments und/oder eines löslichen Farbstoffs, jeweils bezogen auf den Feststoffgehalt. Als Bindemittel eignen sich thermisch vernetzbare Harze wie Kolophonium sowie besonders lufttrocknende Öle wie vor allem Leinöl.

Der Mineralölanteil in diesen Druckfarben beträgt, wie beim Offset-Druck üblich, allgemein 10 bis 50 Gew.-%, bezogen auf die Gesamtmenge der Druckfarbe. Als Mineralöle kommen vorzugsweise aromatenfreie Kohlenwasserstoffe des Siedebereichs von 200 bis 370°C in Betracht.

Außer den genannten Bestandteilen können die Druckfarben noch weitere Hilfsmittel, z.B. Antioxidantien, Wachse in den hierfür üblichen Mengen enthalten.

Hauptsächlich dient das Offset-Heatset-Druckverfahren dem Bedrukken von Papier, jedoch sind auch andere Substrate wie beispielsweise Karton geeignet.

Die nach dem erfindungsgemäßen Verfahren erhältlichen Drucke unter Verwendung der definitionsgemäßen neuen Druckfarben sowie der neuen Spezifikation des oxidierten Polyethylenwachses, zeichnen sich durch eine hohe Abriebfestigkeit aus. Die Abriebfestigkeit kann mit Prüfgeräten ermittelt werden, bei denen das bedruckte Papier mittels eines Schleifelements so oft einem Schleifvorgang unterworfen wird, bis der Druck deutlich sichtbare Schleifspuren aufweist.

### Beispiele

Mit einer Druckfarbe aus

| | |
|---|---|
| 25 g | phenolmodifiziertem Kolophoniumharz, |
| | |
| 5 g | Alkydharz, |
| | |
| 40 g | Mineralöl (Siedebereich 250 bis 300°C), |
| | |
| 5 g | Leinöl/Sojaöl |
| | |
| 18 g | Lithol Rubin D 45 60 (Calcium-Salz eines Azo-Pigments) und |
| | |
| 0,3 g | eines oxidierten Polyethylenwachses mit den folgenden |

### Kenndaten:

Schmelzeviskosität (DGF M-III 8 (75)) :4500 mm²/s
Säurezahl (DGF M-IV 2 (57)): 22 mg KOH/g Polymer
Dichte (DGF M-III 2a (57)): 0,99 g/cm³
Mittlere Teilchengröße: 18 µm
wurden auf beidseitig gestrichenem Offset-Papier wie üblich Offset-Drucke erzeugt die dann zur Trocknung und Fixierung des Drukkes drei Sekunden lang in Kontakt mit einer auf 150°C erhitzten Walze gebracht wurden. Die Abriebfestigkeit des Druckes wurde dann in einem sogenannten Scheuerprüfer der Firma Prüfbau durch wiederholtes Reiben der Drucke ermittelt. Das Maß der Abriebfestigkeit ist die Anzahl der Reibe-Zyklen nach der der Druck deutliche Scheuerspuren aufweist. Die Zyklen-Zahl betrug in diesem Beispiel 50.

Ohne die Mitverwendung eines Hilfsmittels zur Erhöhung der Abriebfestigkeit betrug die Zyklenzahl 8.

Bei der Mitverwendung des wachsartigen, mikronisierten Fluorpolymeren Fluon FL 1680 ^{(R)} der Firma 3 M Company betrug dann die Zyklenzahl 25.

## Patentansprüche

1. Verfahren zur Erzeugung von Drucken nach dem Offset-Heatset-Verfahren mittels einer Druckfarbe auf Mineralölbasis unter Mitverwendung eines oxidierten Olefinpolymerisats, zur Erhöhung der Abriebfestigkeit des Druckes, dadurch gekennzeichnet, daß man ein oxidiertes Olefinpolymerisat mit der mittleren Teilchengröße im Bereich von 0,5 bis 40 µm verwendet, das eine Säurezahl von 5 bis 50 mg KOH/g Polymer, gemessen nach DGF M-IV 2 (57) hat, dessen Schmelzeviskosität 100 bis 15000 mm²/s beträgt, gemessen nach DGF M-III 8 (75), und welches eine Dichte im Bereich von 0,97 bis 1,00 g/cm³, gemessen nach DGF M-III 2a (57), aufweist.

2. Verfahren nach Anspruch 1, dadurch gekennzeichnet, daß man als oxidiertes Olefinpolymerisat ein oxidiertes Polyethylen verwendet.

3. Verfahren nach Anspruch 1, dadurch gekennzeichnet, daß man als oxidiertes Olefinpolymerisat ein oxidiertes Polypropylen verwendet.

4. Verfahren nach Anspruch 3, dadurch gekennzeichnet, daß das oxidierte Polypropylen einen Schmelzpunkt von 110 bis 170°C hat.

5. Verfahren nach den Ansprüchen 1 bis 4, dadurch gekennzeichnet, daß man das oxidierte Olefinpolymerisat in Form von feinen Teilchen einsetzt, die durch Mahlen erhalten wurden.

6. Druckfarbe auf Mineralölbasis, enthaltend 0,05 bis 10 Gew.-%, bezogen auf den Feststoffgehalt der Druckfarbe, eines feinteiligen oxidierten Olefinpolymerisats der mittleren Teilchengröße 0,5 bis 40 µm, der Säurezahl 5 bis 50 mg KOH/g Polymer, gemessen nach DGF M-IV 2 (57), der Schmelzeviskosität von 100 bis 15000 mm²/s, gemessen nach DGF M-III 8 (75), und einer Dichte im Bereich von 0,97 bis 1,00 g/cm³.

7. Feinteiliges oxidiertes Polyethylen der Säurezahl von 5 bis 50 mg KOH/g Polymer, gemessen nach DGF M-IV 2 (57), der Dichte 0,97 bis 1,00 g/cm³, gemessen nach DGF M-III 2a (57), der mittleren Teilchengröße von 0,5 bis 40 µm und der Schmelzeviskosität von 100 bis 15000 mm²/s, gemessen nach DGF M-III 8 (75).

## Claims

1. A process for the production of prints by the offset heatset process using a printing ink based on mineral oil and additionally using an oxidized olefin polymer for increasing the abrasion resistance of the prints, which comprises using an oxidized olefin polymer having a mean particle size in the range from 0.5 to 40 µm which has an acid number of from 5 to 50 mg of KOH/g of polymer, measured in accordance with DGF M-IV 2 (57), a melt viscosity of from 100 to 15,000 mm²/s, measured in accordance with DGF M-III 8 (75), and a density in the range from 0.97 to 1.00 g/cm³, measured in accordance with DGF M-III 2a (57).

2. A process as claimed in claim 1, wherein the oxidized olefin polymer is an oxidized polyethylene.

3. A process as claimed in claim 1, wherein the oxidized olefin polymer is an oxidized polypropylene.

4. A process as claimed in claim 3, wherein the oxidized polypropylene has a melting point of from 110 to 170°C.

5. A process as claimed in any of claims 1 to 4, wherein the oxidized olefin polymer is employed in the form of fine particles obtained by grinding.

6. A printing ink based on mineral oil, containing from 0.05 to 10% by weight, based on the solids content of the printing ink, of a finely divided oxidized olefin polymer having a mean particle size of from 0.5 to 40 µm, an acid number of from 5 to 50 mg of KOH/g of polymer, measured in accordance with DGF M-IV 2 (57), a melt viscosity of from 100 to 15,000 mm²/s, measured in accordance with DGF M-III 8 (75), and a density in the range from 0.97 to 1.00 g/cm³.

7. A finely divided oxidized polyethylene having an acid number of from 5 to 50 mg of KOH/g of polymer, measured in accordance with DGF M-IV 2 (57), a density of from 0.97 to 1.00 g/cm³, measured in accordance with DGF M-III 2a (57), a mean particle size of from 0.5 to 40 µm and a melt viscosity of from 100 to 15,000 mm²/s, measured in accordance with DGF M-III 8 (75).

## Revendications

1. Procédé pour la production d'imprimés conformément au procédé offset utilisant une encre séchant à la chaleur, à l'aide d'une encre d'impression à base d'huile minérale, en utilisant de manière conjointe un polymère oléfinique oxydé pour augmenter la résistance de l'imprimé au frottement, caractérisé en ce qu'on utilise un polymère oléfinique oxydé dont la granulométrie moyenne se situe dans le domaine de 0,5 à 40 µm, qui possède un indice d'acide de 5 à 50 mg de KOH/g de polymère, mesuré conformément à la norme DGF M-IV 2 (57), dont la viscosité en fusion s'élève de 100 à 15.000 mm²/s, mesurée conformément à la norme DGF M-III 8 (75) et qui présente une densité dans le domaine de 0,97 à 1,00 g/cm³, mesurée conformément à la norme DGF M-III 2a (67).

2. Procédé selon la revendication 1, caractérisé en ce qu'on utilise, à titre de polymère oléfinique oxydé, un polyéthylène oxydé.

3. Procédé selon la revendication 1, caractérisé en ce qu'on utilise, à titre de polymère oléfinique oxydé, un polypropylène oxydé.

4. Procédé selon la revendication 3, caractérisé en ce que le polypropylène oxydé possède un point de fusion de 110 à 170°C.

5. Procédé selon les revendications 1 à 4, caractérisé en ce qu'on met en oeuvre le polymère oléfinique oxydé sous forme de fines particules que l'on obtient par broyage.

6. Encre d'impression à base d'huile minérale contenant, à concurrence de 0,05 à 10% en poids rapportés à la teneur en substances solides de l'encre d'impression, un polymère oléfinique oxydé finement divisé dont la granulométrie moyenne s'élève de 0,5 à 40 µm, possédant un indice d'acide de 5 à 50 mg de KOH/g de polymère, mesuré conformément à la norme DGF M-IV 2 (57), une viscosité en fusion de 100 à 15.000 mm²/s mesurée conformément à la norme DGF M-III 8 (75) et une densité dans le domaine de 0,97 à 1,00 g/cm³.

7. Polyéthylène oxydé finement divisé possédant un indice d'acide de 5 à 50 mg de KOH/g de polymère, mesuré conformément à la norme DGF M-IV 2 (57), une densité de 0,97 à 1,00 g/cm³ mesurée conformément à la norme DGF M-III 2a (57), une granulométrie moyenne de 0,5 à 40 µm et une viscosité en fusion de 100 à 15.000 mm²/s mesurée conformément à la norme DGF M-III 8 (75).
